# EUROPÄISCHE PATENTSCHRIFT

(11) **EP 1 381 823 B1**
(45) Veröffentlichungstag und Bekanntmachung des Hinweises auf die Patenterteilung: **29.06.2005**
(21) Anmeldenummer: 02735310.1
(22) Anmeldetag: 26.04.2002
(51) Int. Cl.: G01B 5/008, G01B 5/00, F16C 39/06

(54) **LAGERUNG FÜR EIN KOORDINATENMESSGERÄT**
BEARING FOR A COORDINATE MEASURING INSTRUMENT
SUPPORT POUR APPAREIL DE MESURE DE COORDONNEES

(30) Priorität: 26.04.2001 DE 10120553
(43) Veröffentlichungstag der Anmeldung: 21.01.2004
(73) Patentinhaber: Werth Messtechnik GmbH, 35394 Giessen (DE)
(72) Erfinder: CHRISTOPH, Ralf, 35394 Giessen (DE)
(74) Vertreter: Stoffregen, Hans-Herbert, Dr. Dipl.-Phys.
(86) Internationale Anmeldenummer: PCT/EP2002/004674
(87) Internationale Veröffentlichungsnummer: WO 2002/088624

(56) Entgegenhaltungen:
- DE-A- 2 829 715
- US-A- 4 834 353
- US-A- 5 763 966

## Beschreibung

Die Erfindung bezieht sich auf ein Koordinatenmessgerät umfassend ein entlang einer Führung in vertikaler Richtung (Z-Achse) des Koordinatenmessgerätes verstellbares und zumindest einen Messsensor aufweisendes Element wie Säule oder Pinole, wobei das Element über zumindest ein Luftlager gleitend gegenüber der Führung abstützbar ist, dessen auf das Element übertragene Kraft über eine Gegenkraft kompensierbar ist.

Für die Realisierung hochgenauer Vetschiebeschlitten insbesondere im Bereich von Koordinatenmessgeräten höherer Genauigkeit hat sich der Einsatz von Luftlagern umfassend durchgesetzt. Durch entsprechende Lager werden Vorteile insbesondere in Bezug auf ein geringes Umkehrspiel bzw. geringe Reibung erzielt, die sich in einer hohen Messgenauigkeit widerspiegeln. Nachteilig entsprechender Lagerungen ist es jedoch, dass diese eine erhebliche Kraft zur Vorspannung benötigen.

Es sind Lagerungen bekannt, bei denen die zu verstellbaren Elemente wie Schlitten oder Portale über gegenüberliegende Anordnungen von Luftlagern abgestützt sind. Nachteilig gegenüberliegender Lagerungen ist es, dass eine erforderliche Umschlingung von mechanischen Komponenten gegeben ist. Hierdurch wird die Montage von Zubehöreinheiten bzw. -elementen wie Sensoren beeinträchtigt. Auch werden Wartungsarbeiten erschwert.

Alternativ kann auch die Gravitation zur Erzeugung der vorspannenden Kraft benutzt werden. Dabei sind jedoch Einschränkungen in Bezug auf die Anordnung der Lager im Raum gegeben, so dass infolgedessen ein Einsatz für alle Achsen eines Koordinatenmessgerätes nicht in Frage kommt.

Eine Lagerung für ein Koordinatenmessgerät ist der DE 34 41 426 A1 zu entnehmen. Dabei ist der Sockel eines verschiebbaren Portals mittels Luftlager abgestützt. Jeder Lagerkörper des Luftlagers weist einen als elastisches Element ausgebildeten Vorsprung auf, um einen Hohlraum zu begrenzen, der mit Druckluft beaufschlagbar ist. Aus der DE 44 08 912 A1 ist ein Koordinatenmessgerät bekannt, bei dem ein vertikal verschiebbarer Messschlitten über Druckluftzylinder gelagert ist. Eine Luftlagerung für einen Messkopf einer Koordinatenmessmaschine ist des Weiteren der WO 91/13315 zu entnehmen.

Die DE 28 29 715 A1 bezieht sich auf eine Werkzeug- oder Messmaschine, bei der in X- und Y-Richtung verschiebbare Schlitten über Luftlager abgestützt sind, wobei die von den Luftlagern erzeugten Kräfte über von Magneten erzeugte Gegenkräfte kompensiert werden. Die Säule der bekannten Messmaschine wird ausschließlich über Luftlager gleitend abgestützt.

Nach der US 4,985,651 wird ein Werkzeugtisch über Luftlager abgestützt, deren Kräfte über Magnete kompensierbar sind. Dabei ist der Tisch in X- bzw. in Y-Richtung verstellbar.

Auf einen Träger einwirkende Magnetkräfte werden nach der JP 02 00 10 50 271 A durch ein Luftlager kompensiert.

Der vorliegenden Erfindung liegt das Problem zu Grunde, ein Koordinatenmessgerät zuvor beschriebener Art so weiterzubilden, dass das in vertikaler Richtung (Z-Achse) des Koordinatenmessgerätes verstellbare Element die Möglichkeit bietet, an zumindest einer Außenfläche im gewünschten Umfang mechanische Komponenten bzw. zumindest einen Sensor anzuordnen, ohne dass eine Beeinträchtigung der Lagerung erfolgt.

Erfindungsgemäß wird das Problem im Wesentlichen dadurch gelöst, dass die Kraft des entlang der Z-Achse des Koordinatenmessgerätes verstellbaren Elements durch eine von einem der Führung zugeordneten Magnetsystem hervorgerufene Gegenkraft kompensierbar ist und dass das Element über seinen Verstellweg oder in etwa über seinen Verstellweg einen von der Führung unbedeckten Bereich aufweist, von dem zumindest der eine Messsensor und/oder ein oder mehrere Komponenten des Koordinatenmessgerätes ausgehen.

Erfindungsgemäß wird die für das das axial verschiebbare Element abstützende Luftlager benötigte Vorspannung durch eine zwischen der Halterung und dem axial verschiebbaren Element wirkende von einem Magneten hervorgerufene Zugkraft kompensiert, wobei als Magnetsystem insbesondere ein Permanentmagnet und ein diesem zugeordnetes para- oder ferromagnetisches Material benutzt wird. Dabei können die die jeweiligen Lager bildenden Baugruppen auf gleicher Seite des axial verschiebbaren Elementes einwirken, so dass verbleibender Bereich des Elementes frei zugänglich ist und somit zum Beispiel zur Montage weiterer Baugruppen benutzt werden kann.

Kann die Halterung bzw. die Führung für das insbesondere eine Säule oder Pinole darstellende in Z-Richtung des Koordinatenmessgerätes verstellbare Element eine L-Geometrie aufweisen, ist nach einem weiteren Vorschlag vorgesehen, dass die Halterung bzw. die Führung eine U-Geometrie zeigt, dass zumindest entlang einer Innenfläche von einem der Schenkel der U-Form ein Luftlager ausgeht, dass das Element bzw. die Säule eine Rechteckgeometrie aufweist, wobei drei Außenflächen entlang den Innenflächen der Schenkel verlaufen, und dass verbleibende parallel zum Querschenkel der Halterung bzw. der Führung verlaufende Außenfläche als Befestigung für zumindest einen Messsensor und/oder ein oder mehrere Komponenten des Messgerätes bzw. Koordinatenmessgerätes dient. Dabei ist insbesondere vorgesehen, dass dem Querschenkel der Halterung bzw. der Führung zumindest ein Magnet zur Erzeugung der Gegenkraft zugeordnet ist. Insbesondere verläuft zu beiden Seiten des von dem Querschenkel ausgehenden Luftlagers jeweils ein Magnet.

Durch die magnetisch erzeugte Vorspannung ist die Vorspannkraft innerhalb der Lagerung im Wesentlichen unabhängig von der Einbaulage der Lagerung selbst, so dass ein Einsatz für sämtliche Achsen eines Koordinatenmessgerätes möglich ist.

Insbesondere ist vorgesehen, dass von dem axial verschiebbaren Element ein Permanentmagnet ausgeht, dem ein von der Halterung ausgehendes para- oder ferromagnetisches Material zugeordnet ist oder dieses erhält.

In bevorzugter Weiterbildung wird vorgeschlagen, dass das axial verschiebbare Element einen insbesondere streifen- oder quaderförmig sich entlang des Elementes und parallel zu dessen Verschieberichtung verlaufenden Permanentmagneten mit einer planen Außenfläche aufweist, entlang der sich das eine Leisten- oder Quaderform aufweisende Material der Halterung ausgehend mit einer Außenfläche erstreckt, die parallel zu der des Permanentmagneten verläuft. Selbstverständlich kann auch der Permanentmagnet von der Halterung und das ferro- bzw. paramagnetische Material von dem verschiebbaren Element ausgehen.

Des Weiteren ist vorgesehen, dass das verschiebbare Element eine im Schnitt eine Quadrat- oder Rechteckform aufweisende Säule ist, dass zwischen zwei aneinandergrenzenden ersten Außenflächen der Säule und zugewandtem Bereich der Halterung jeweils ein Luftlager verläuft und dass zwischen den Luftlagern das weitere Lagerelement angeordnet ist, das sich insbesondere entlang zwischen den ersten Außenflächen verlaufender Kante erstreckt. Hierzu kann diese abgeflacht sein, um den streifen- bzw. quaderförmigen Permanentmagneten zu befestigen bzw. das eine entsprechende Geometrie aufweisende para- bzw. ferromagnetische Material, sofern von der Halterung der Magnet ausgeht.

Geht der Magnet von dem verschiebbaren Element aus, so ist ersterem eine von der Halterung ausgehende Leiste insbesondere aus Stahl zugeordnet, um das Magnetsystem zu bilden, um die erforderliche Zugkraft zur Kompensation der von den Luftlagern hervorgerufenen Druckkraft im gewünschten Umfang zu erzeugen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmendem bevorzugten Ausführungsbeispiel.

Es zeigen:
- Fig. 1: einen Querschnitt einer Lagerung für einen beweglichen Schlitten nach dem Stand der Technik,
- Fig. 2: einen Querschnitt einer ersten Ausführungsform einer erfindungsgemäßen Lagerung,
- Fig. 3: eine Prinzipdarstellung eines Koordinatenmessgerätes mit Detaildarstellung und
- Fig. 4: einen Querschnitt einer zweiten Ausführungsform einer erfindungsgemäßen Lagerung.

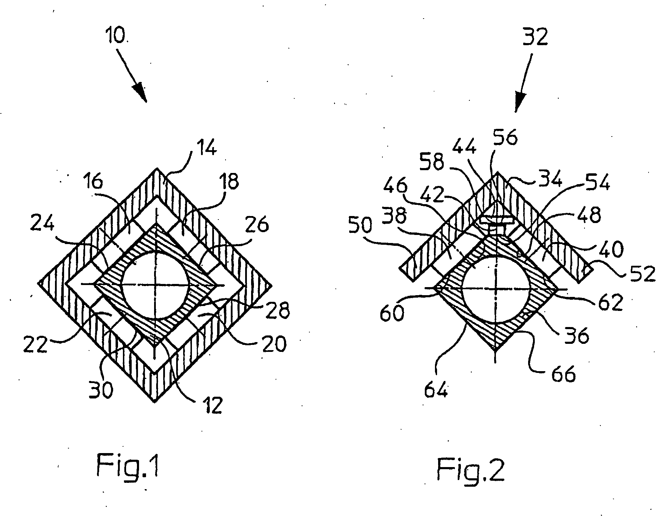

In der Fig. 1 ist eine Prinzipdarstellung einer Lagerung 10 im Querschnitt nach dem Stand der Technik zu entnehmen, die für eine Säule 12 eines Koordinatenmessgerätes bestimmt ist. Die Säule 12 ist von einer Halterung 14 umgeben und gegenüber dieser über Luftlager 16, 18, 20, 22 abgestützt.

Bei den Luftlagern 16, 18, 20, 22 handelt es sich um solche herkömmlicher Konstruktion, über die zwischen der Säule 12 und dem Lager 16, 18, 20, 22 ein Luftspalt 24, 26, 28, 30 ausgebildet wird, um den Schlitten schwebend durch die Halterung 14 und in axialer Richtung des Schlittens 12 verschieben zu können.

Wie die Prinzipdarstellung der Fig. 1 des Weiteren verdeutlicht, müssen zur Erzielung der erforderlichen Vorspannung auf gegenüberliegenden Seiten der Säule 12 entsprechende Luftlager 16, 18, 20, 22 angeordnet werden, da andernfalls eine schwebende Abstützung nicht möglich wäre. Dies wiederum bedeutet, dass die Säule 12 von der Halterung 14 - im Ausführungsbeispiel umlaufend - umgeben sein muss mit der Folge, dass an der Säule 12 nur im eingeschränkten Umfang Komponenten wie Sensoren eines Koordinatenmessgerätes befestigbar sind. Auch können aufgrund der mechanischen Umschlingung der Säule 12 Erschwerungen bei Wartungsarbeiten erwachsen.

Abweichend vom Stand der Technik wird erfindungsgemäß eine Lagerung 32 vorgeschlagen, die die Vorteile einer Luftlagerung aufweist, ohne jedoch deren Nachteile zu übernehmen. So ist vorgesehen, dass die von der Luftlagerung ausgehenden Druckkräfte über ein Magnetsystem durch von diesem hervorgerufene Zugkräfte im erforderlichen Umfang kompensiert werden, um ein schwebendes Führen eines verstellbaren Elementes 36 wie einer Pinole eines Koordinatenmessgerätes zu ermöglichen, wobei das Verstellen entlang der Z-Achse erfolgt.

Die in Fig. 2 ebenfalls rein prinzipiell dargestellte Lagerung 32 umfasst eine beispielhaft V- oder L-förmige Halterung 34 oder Führung, entlang der das Element 36 in Form einer Säule bzw. Pinole axial verschiebbar sein soll. Allgemein wird das Element 36 nachstehend als Pinole bezeichnet. Die Pinole 36 ist gegenüber der Halterung 34 über zwei Luftlager 38, 40 abgestützt. Um die erforderliche Vorspannung zu bewirken, ist zwischen der Pinole 36 und der Halterung 34 ein Magnetsystem bestehend aus einem Permanentmagneten 42 und einem diesem zugeordneten para- oder ferromagnetischen Material 44 vorgesehen.

Die Luftlager 38, 40 wirken auf benachbarte Außenflächen 46, 48 der im Schnitt eine Rechteck- bzw. Quaderform aufweisenden Pinole 36. Entsprechend erstreckt sich die Halterung 34 mit Schenkeln 50, 52 entlang der Flächen 46, 48, um die Luftlager 38, 40 auszubilden. Die für die Luftlager 38, 40 zur Druckbeaufschlagung dieser erforderliche Vorspannung wird durch das aus dem Permanentmagneten 42 und dem para- bzw. ferromagnetischen Material 44 in Form einer Leiste gebildete Magnetsystem erzeugt.

Dabei geht im Ausführungsbeispiel der Permanentmagnet 42 von einer abgeflachten zwischen den aneinandergrenzenden Flächen 46, 48 verlaufenden Kante 54 aus und weist eine plane Außenfläche 56 auf, die parallel zu einer auf dieser ausgerichteten Fläche 58 der zum Beispiel aus Stahl bestehenden Leiste 44 verläuft.

Selbstverständlich können Permanentmagnet und Leiste 44 auch ausgetauscht werden.

Durch das Magnetsystem 42, 44 wird erwähntermaßen die erforderliche Vorspannung für die Luftlager 38, 40 erzeugt, so dass sich der erforderliche Spalt 60, 62 im Bereich der Luftlager 38, 40 ausbildet, um die Pinole 36 schwebend axial entlang der Halterung 34 verschieben zu können.

Die verbleibenden Außenflächen 64, 66 der Pinole 36 weisen folglich Luftlager nicht auf und sind somit aufgrund der erfindungsgemäßen Lehre frei zugänglich und können im Wesentlichen uneingeschränkt als Montageflächen für zum Beispiel Komponenten wie Sensoren eines Koordinatenmessgerätes benutzt werden.

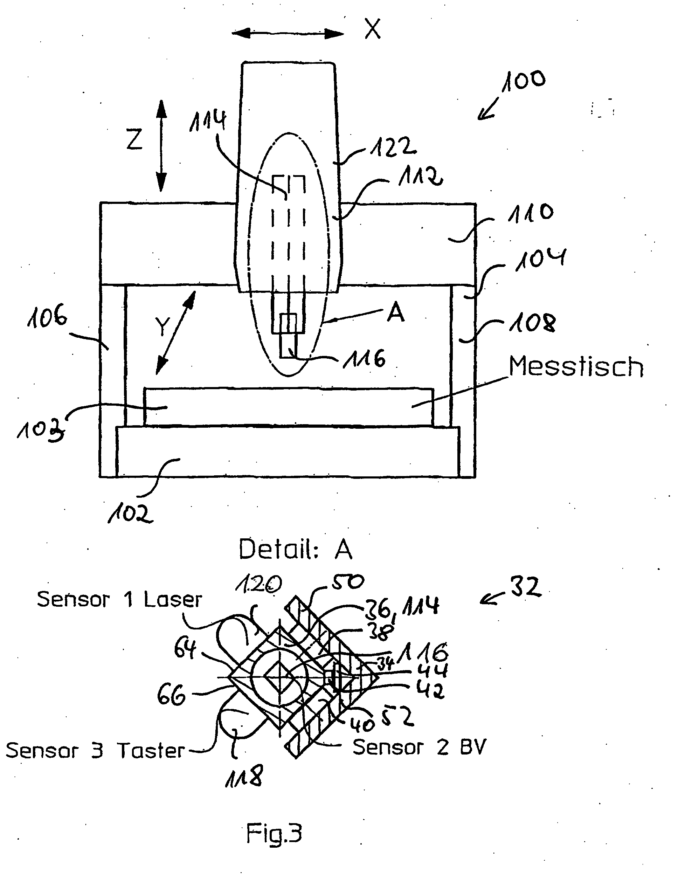

Die erfindungsgemäße Lehre soll insbesondere anhand der Fig. 3 erläutert werden. So ist rein prinzipiell ein Koordinatenmessgerät 100 dargestellt, das in bekannter Weise einen Grundrahmen 102 aufweist, auf dem ein Messtisch 108 angeordnet ist. Entlang dem Grundrahmen 102 ist ein Portal 104 in Y-Richtung verstellbar. Hierzu sind Säulen oder Ständer 104, 106 gleitend auf dem Grundrahmen 102 abgestützt. Von den Säulen 106,108 geht eine Traverse 110 aus, entlang der, also in X-Richtung ein Schlitten 112 verstellbar ist, der seinerseits eine Pinole oder Säule 114 aufnimmt, die in Z-Richtung verstellbar ist. Von der Pinole oder Säule 114 geht ein Messsensor 116 wie Optik eines Bildverarbeitungssensors aus. Die Pinole - erwähntermaßen auch Säule 114 genannt ― ist von einer erfindungsgemäß ausgebildeten Führung entsprechend der Fig. 2 aufgenommen, so dass für gleiche Elemente gleiche Bezugszeichen verwendet werden.

Da zwei Außenflächen 64, 66 der Säule 114 frei zugänglich sind, können von diesen Messsensoren wie Laserabstandssensor 120, optotaktiler oder taktiler Taster 118 ausgehen.

Dadurch, dass die Außenflächen 64, 66 der Pinole bzw. Säule 114 frei zugänglich sind, ergibt sich ein kompakter Aufbau, wobei die Sensoren 118, 120 selbst innerhalb einer Abdeckung bzw. eines Gehäuses 122 in Z-Richtung verstellbar sind, also geschützt sind.

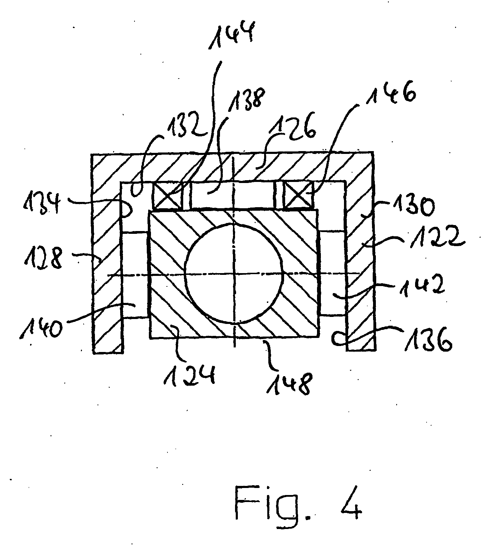

In Fig. 4 ist eine weitere Ausführungsform einer erfindungsgemäßen Lagerung dargestellt. So nimmt eine im Schnitt U-förmige Führung 122 eine Säule 124 oder Pinole auf; die im Schnitt eine Rechteckgeometrie aufweist. Die Führung 122 weist einen Querschenkel 126 sowie senkrecht hierzu verlaufende Seitenschenkel 128, 130 auf, von deren Innenflächen 132, 134, 136 Luftlager 138, 140, 142 ausgehen. Zur Erzeugung der der durch Luftbeaufschlagung der Luftlager 138, 140, 142 erzeugten abstoßenden Kraft erforderlichen Gegenkraft, um also die Säule 124 gleitend führen zu können, gehen von der Innenfläche 132 des Querschenkels 126 zu beiden Seiten des Luftlagers 138 Magnetanordnungen 144, 146 aus. Über diese wird die notwendige anziehende Gegenkraft erzeugt. Durch die diesbezügliche Ausbildung weist die Säule 124 eine parallel zum Querschenkel 126 verlaufende freie Außenfläche 148 auf, von der ein oder mehrere Messsensoren und/oder ein oder mehrere Komponenten des Koordinatenmessgerätes o. ä. ausgehen bzw. befestigt sein.

Die Säule 124 wird über einen Antrieb entlang der Z-Achse verstellt. Hierzu kann von Kopf der Säule 124 ein Seil ausgehen, das umgelenkt wird, um mit einem Servomotor oder Schrittmotor verbunden zu werden, wodurch ein scheinbares Verkürzen oder Verlängern des Seils mit dem Ergebnis erfolgt, dass die Säule 124 entlang der Z-Achse verstellbar ist. Andere Antriebsmöglichkeiten sind gleichfalls denkbar.

## Patentansprüche

1. Koordinatenmessgerät (100) umfassend ein entlang einer Führung (34, 122) in vertikaler Richtung (Z-Achse) des Koordinatenmessgerätes verstellbares und zumindest einen Messsensor (116, 118, 120) aufweisendes Element (36, 114) wie Säule oder Pinole, wobei das Element über zumindest ein Luftlager (38, 40, 140, 142) gleitend gegenüber der Führung abstützbar ist, dessen auf das Element übertragene Kraft über eine Gegenkraft kompensierbar ist,
**dadurch gekennzeichnet,**
**dass** die von dem Luftlager (38, 40) erzeugte Kraft des in vertikaler Richtung (Z-Achse) des Koordinatenmessgerätes (100) verstellbaren Elements (36, 140) durch eine von einem der Führungen (34, 112) zugeordneten Magnetsystem (42, 44) hervorgerufene Gegenkraft kompensierbar ist und dass das Element über seinen Verstellweg oder in etwa über seinen Verstellweg einen von der Führung unbedeckten Bereich aufweist, von dem zumindest der eine Messsensor und/oder ein oder mehrere Komponenten des Koordinatemessgerätes ausgehen.

2. Koordinatenmessgerät nach Anspruch 1,
**dadurch gekennzeichnet,**
**dass** das verstellbare Element (36, 114) zumindest drei sich entlang des Verstellweges erstreckende Außenflächen (46, 48, 64, 66, 148) aufweist, von denen eine Außenfläche (64, 66, 148) Befestigungsfläche für den zumindest einen Messsensor (118, 120) bzw. den bzw. die Komponenten des Koordinatenmessgerätes (100) ist.

3. Koordinatenmessgerät nach Anspruch 1,
**dadurch gekennzeichnet,**
**dass** von dem verstellbaren Element (36, 114) ein verstellbarer Permanentmagnet (42) ausgeht, dem ein von der Führung (34, 122) ausgehendes para- oder ferromagnetisches Material zugeordnet ist oder der dieses enthält.

4. Koordinatenmessgerät nach Anspruch 1,
**dadurch gekennzeichnet,**
**dass** von der Führung (34, 122) ein Permanentmagnet ausgeht, dem ein von dem verstellbaren Element (36, 114) ausgehendes aus para- oder ferromagnetischen Material bestehendes Gegenelement (44) zugeordnet ist.

5. Koordinatenmessgerät nach Anspruch 3,
**dadurch gekennzeichnet,**
**dass** das zu der Führung (34, 122) axial verstellbare Element (36, 114) einen entlang der Z-Achse des Koordinatenmessgerätes (100) verlaufenden Permanentmagnet (42) mit einer planen Außenfläche aufweist, entlang der sich das von der Führung ausgehende eine Leisten- oder Quaderform aufweisende Gegenelement (44) aus dem para- oder ferromagnetischem Material mit einer Außenfläche (58) erstreckt, die parallel zu der des Permanentmagneten verläuft.

6. Koordinatenmessgerät nach Anspruch 4,
**dadurch gekennzeichnet,**
**dass** das zu der Führung (34,122) axial verstellbare Element (36) einen entlang der Z-Achse des Koordinatenmessgerätes (100) verlaufenden Bereich oder eine Leiste als das Gegenelement (44) aus dem para- oder ferromagnetischen Material mit einer planen Außenfläche aufweist, entlang der sich der von der Führung ausgehende eine Leisten- oder Quadedbrm aufweisende Permanentmagnet (42) mit einer Außenfläche (58) erstreckt, die parallel zu dem Gegenelement verläuft.

7. Koordinatenmessgerät nach Anspruch 1,
**dadurch gekennzeichnet,**
**dass** das entlang der Z-Achse verstellbare Element (36, 114) im Schnitt eine Quadrat- oder Rechteckform aufweist, dass zwischen zwei aneinandergrenzenden ersten Außenflächen (46, 48) des Elements und zugewandtem Bereich der Führung (34, 122) jeweils zumindest ein Luftlager (38, 40) angeordnet ist und dass zwischen den Luftlagem im Schnittpunktbereich der Außenflächen der Magnet (42, 44) verläuft.

8. Koordinatenmessgerät nach Anspruch 7,
**dadurch gekennzeichnet,**
**dass** entlang zwischen den ersten Außenflächen (46, 48) des verstellbaren Elements (36, 114) verlaufender Kante (54) Magnet und Gegenelement (42, 44) angeordnet sind.

9. Koordinatenmessgerät nach Anspruch 8,
**dadurch gekennzeichnet,**
**dass** die Kante (54) abgeflacht ist und den streifen- oder quaderförmig ausgebildeten Permanentmagneten (42) aufweist.

10. Koordinatenmessgerät nach Anspruch 9,
**dadurch gekennzeichnet,**
**dass** dem Permanentmagneten (42) eine von der Führung (34, 122) ausgehende Leiste (44) insbesondere aus Stahl zugeordnet ist.

11. Koordinatenmessgerät nach Anspruch 8 oder 9,
**dadurch gekennzeichnet,**
**dass** dem Permanentmagneten (42) eine von dem verstellbaren Element (36, 114) ausgehende Leiste (44) insbesondere aus Stahl zugeordnet ist.

12. Koordinatenmessgerät nach Anspruch 1,
**dadurch gekennzeichnet,**
**dass** die Führung (122) im Schnitt eine U-Form mit Querschenkel (126) sowie Seitenschenkeln (128, 130) aufweist, dass von zumindest einer Innenfläche (122, 134, 136) der Schenkel zumindest ein Luftlager (138, 140, 142) ausgeht, dass das entlang der Führung verstellbare Element (124) im Schnitt eine Rechteckgeometrie aufweist, wobei drei Außenflächen entlang den Innenflächen der Schenkel verlaufen und die verbleibende parallel zum Querschenkel (126) der Führung verlaufende Außenfläche (148) Befestigung für zumindest einen Messsensor (118, 120) und/oder eine oder mehrere Komponenten des Koordinatenmessgerätes (100) ist

13. Koordinatenmessgerät nach Anspruch 12,
**dadurch gekennzeichnet,**
**dass** dem Querschenkel (126) der Führung (122) zumindest ein Magnet (144, 146) zur Erzeugung der Gegenkraft zugeordnet ist.

14. Koordinatenmessgerät nach Anspruch 12,
**dadurch gekennzeichnet,**
**dass** zu beiden Seiten des zumindest einen von dem Querschenkel (126) der Führung (122) ausgehenden Luftlagers (138) jeweils ein Magnet (144, 146) verläuft.

## Claims

1. Coordinate measuring device (100) comprising an element (36, 114) as column or sleeve that is movable along a guiding device (34, 122) in vertical direction (Z-axis) of the coordinate measuring device and comprises at least one measurement sensor (116, 118, 120), whereby the element by at least one air bearing (38, 40, 140, 142) is glidingly supportable relative to the guiding device, whose force transmitted to the element is capable of being compensated by a counterforce,
**characterized in**
**that** the force produced by the air bearing (38, 40) of the element (36, 40) movable in vertical direction (Z-axis) of the coordinate measuring device (100) is capable of being compensated by a counterforce produced by a magnet system (42, 44) allocated to one of the guiding devices (34, 112) and that the element has an area that is not covered by the guiding device over its movement pathway or approximately over its movement pathway from which at least the one measurement sensor and/or one or more components of the coordinate measuring device originate.

2. Coordinate measuring device according to claim 1,
**characterized in**
**that** the movable element (36, 114) has at least three outer surfaces (46, 48, 64, 66, 148), which extend along the movement pathway, of which one outer surface (64, 66, 148) is an attachment surface for the at least one measurement sensor (118, 120) or the component or the components of the coordinate measuring device (100).

3. Coordinate measuring device according to claim 1,
**characterized in**
**that** from the movable element (36, 114) a movable permanent magnet (42) originates to which a paramagnetic or ferromagnetic material is allocated originating from the guiding device (34, 122), or which contains it.

4. Coordinate measuring device according to claim 1,
**characterized in**
**that** from the guiding device (34, 122) a permanent magnet originates to which a counteracting element (44) is allocated originating from the movable element (36, 114) and comprising a paramagnetic or ferromagnetic material.

5. Coordinate measuring device according to claim 3,
**characterized in**
**that** the element (36, 114) axially movable relative to the guiding device (34, 122) has a permanent magnet (42) running along the Z-axis of the coordinate measuring device (100) and having a planar outer surface, along which the counteracting element (44) extends that originates from the guiding device and that has the shape of a batten or parallelepiped and that comprises a paramagnetic or ferromagnetic material with an outer surface (58) that runs parallel to that of the permanent magnet.

6. Coordinate measuring device according to claim 4,
**characterized in**
**that** the element (36) being axially movable relative to the guiding device (34, 122) has an area running along the Z-axis of the coordinate measuring device (100), or a batten as the counteracting element (44) comprising the paramagnetic or ferromagnetic material with a planar outer surface (58) that runs parallel to the counteracting element.

7. Coordinate measuring device according to claim 1,
**characterized in**
**that** the element (36) which is movable along the Z-axis has a square or rectangular shape in section, that at least one air bearing (38, 40) is arranged between each of two abutting first outer surfaces (46, 48) of the element und an area of the guiding element (34, 122) that faces toward them, and that between the air bearings in the region of the point of intersection of the outer surfaces the magnet (42, 44) runs.

8. Coordinate measuring device according to claim 7,
**characterized in**
**that** the magnet and counteracting element (42, 44) are arranged along the edge (54) that runs between the first outer surfaces (46, 48) of the movable element (36, 114).

9. Coordinate measuring device according to claim 8,
**characterized in**
**that** the edge (54) is bevelled and exhibits the permanent magnet (42) designed strip-shaped or parallelepiped shaped.

10. Coordinate measuring device according to claim 9,
**characterized in**
**that** to the permanent magnet (42) a batten (44) is allocated originating from the guiding device (34, 122) and especially comprising steel.

11. Coordinate measuring device according to claim 8 or 9,
**characterized in**
**that** to the permanent magnet (42) a batten (44) is allocated originating from the movable element (36, 114) and especially comprising steel.

12. Coordinate measuring device according to claim 1,
**characterized in**
**that** the guiding device (122) has a U-shaped cross section with a transverse shank (126) and lateral shanks (128, 130), that at least one air bearing (138, 140, 142) originates from at least one inner surface (122, 134, 136) of the shanks, that the element (124) movable along the guiding device has a rectangular cross sectional geometry, whereby three outer surfaces run along the inner surfaces of the shanks and the remaining outer surface (148) running parallel to the transverse shank (126) of the guiding device is an attachment for at least one measurement sensor (118, 120) and/or one or more components of the coordinate measuring device (100).

13. Coordinate measuring device according to claim 12,
**characterized in**
**that** at least one magnet (144, 146) for producing the counteracting force is allocated to the transverse shank (126) of the guiding device (122).

14. Coordinate measuring device according to claim 12,
**characterized in**
**that** a magnet (144, 146) extends at each of the two sides of the at least one air-bearing (138) originating from the transverse shank (126) of the guiding element (122).

## Revendications

1. Appareil de mesure de coordonnées (100) comprenant un élément (36, 114) tel qu'une douille qui peut se déplacer le long d'un guide (34, 122) selon la direction verticale (axe Z) de l'appareil de mesure de coordonnées et qui présente au moins un capteur de mesure (116, 118, 120), cet élément pouvant s'appuyer par l'intermédiaire d'au moins un palier à air (38, 40, 140, 142) en glissant par rapport au guide, la force transmise à l'élément par le palier pouvant être compensée par une force d'opposition,
**caractérisé en ce que**
la force produite par le palier à air (38, 40), de l'élément mobile (36 ; 114) selon la direction verticale (axe des Z) de l'appareil de mesure de coordonnées peut être compensée par une force d'opposition produite par un système magnétique (42, 44) associé au guide (34, 112), et l'élément présente sur son parcours de déplacement ou un peu au-delà de ce parcours une zone qui n'est pas recouverte par le guide et dont au moins est issu un capteur de mesure et/ou un ou plusieurs composants de l'appareil de mesure de coordonnées.

2. Appareil de mesure selon la revendication 1,
**caractérisé en ce que**
l'élément mobile (36, 114) présente au moins trois faces externes (46, 48, 64, 66, 148) disposées selon la direction de son déplacement et dont l'une (64, 66, 148) est une portée de fixation pour au moins un capteur de mesure (118, 120) et le ou les composants de l'appareil de mesure de coordonnées (100).

3. Appareil de mesure selon la revendication 1,
**caractérisé en ce que**
de l'élément mobile (36, 114) part un aimant permanent mobile (42) auquel est associé ou qui contient un matériau para- ou ferromagnétique partant du guide (34, 122).

4. Appareil de mesure selon la revendication 1,
**caractérisé en ce que**
du guide (34, 122) part un aimant permanent auquel est associé un contre-élément (44) partant de l'élément mobile (36, 114) et constitué d'un matériau para ou ferromagnétique.

5. Appareil de mesure selon la revendication 3,
**caractérisé en ce que**
l'élément (36, 114) mobile axialement par rapport au guide (34, 122) présente un aimant permanent s'étendant le long de l'axe des Z de l'appareil de mesure de coordonnées (100), avec une face externe plane le long de laquelle s'étend le contre-élément (44), en matériau para ou ferromagnétique, qui part du guide et présente la forme d'une baguette ou d'un parallélépipède avec une face externe (58) qui est parallèle à celle de l'élément permanent.

6. Appareil de mesure selon la revendication 4,
**caractérisé en ce que**
l'élément (36) mobile axialement par rapport au guide (34, 122) présente le long de l'axe Z de l'appareil de mesure de coordonnées (100) une zone ou une barrette en tant que contre-élément (44) en matériau para ou ferromagnétique avec une face externe plane le long de laquelle s'étend l'élément permanent (42) partant du guide et présentant la forme d'une baguette ou d'un parallélépipède, avec une face externe (58) qui est parallèle au contre-élément.

7. Appareil de mesure selon la revendication 1,
**caractérisé en ce que**
l'élément (36, 114) mobile le long de l'axe des Z présente en coupe la forme d'un carré ou d'un rectangle, et entre deux premières faces externes contiguës (46, 48) de l'élément et la zone du guide (34, 122) située en face, se trouve chaque fois au moins un palier à air (38, 40), l'élément (42, 44) se trouvant entre ces paliers dans la zone où se coupent les faces externes de l'élément (42, 44).

8. Appareil de mesure selon la revendication 7,
**caractérisé en ce que**
le long de l'arête (54) que présente l'élément mobile (36, 114) entre les premières faces externes (46, 48), sont disposés un aimant et le contre-élément (42, 44).

9. Appareil de mesure selon la revendication 8,
**caractérisé en ce que**
l'arête (54) est aplatie et présente l'aimant permanent (42) en forme de barrette ou de parallélépipède.

10. Appareil de mesure selon la revendication 9,
**caractérisé en ce qu'**
à l'aimant permanent (42) est associé une baguette (44), notamment en acier, partant du guide (34, 122).

11. Appareil de mesure selon la revendication 8 ou 9,
**caractérisé en ce qu'**
à l'aimant permanent (42) est associé une baguette (44), notamment en acier, partant de l'élément mobile (36, 114).

12. Appareil de mesure selon la revendication 1,
**caractérisé en ce que**
le guide (122) présente en coupe la forme d'un U avec une branche transversale (126) et des branches latérales (128, 130),
- au moins un palier à air (138, 140, 142) part d'au moins une face interne (122, 134, 136) des branches,
- l'élément (124) mobile le long du guide présente en coupe la forme d'un rectangle, avec trois faces externes qui s'étendent le long des faces internes des branches et la quatrième face externe (148) restante et qui est parallèle à la branches transversale (126) du guide sert à fixer au moins un capteur de mesure (118, 120) et/ou un ou plusieurs composants de l'appareil de mesure de coordonnées (100).

13. Appareil de mesure selon la revendication 12,
**caractérisé en ce qu'**
à la branche transversale (126) du guide (122) est associé au moins un aimant (144, 146) pour produire la force d'opposition.

14. Appareil de mesure selon la revendication 12,
**caractérisé en ce que**
sur chacun des deux côtés d'au moins un palier à air (138) partant de la branche transversale (126) du guide (122), s'étend un aimant (146, 148).
